# FASCICULE DE BREVET EUROPEEN

(11) **EP 1 666 293 B1**
(45) Date de publication et mention de la délivrance du brevet: **14.05.2008**
(21) Numéro de dépôt: 05292508.8
(22) Date de dépôt: 25.11.2005
(51) Int. Cl.: B60J 7/02

(54) **Toit escamotable pour véhicule, à bras mobiles et éléments de toit ouvrants**
Ablegbares Fahrzeugdach mit beweglichen Seitenholmen und zu öffnenden Dachteilen
Retractable vehicle roof with movable arms and openable roof panels

(30) Priorité: 01.12.2004 FR 0412772; 02.12.2004 FR 0412807
(43) Date de publication de la demande: 07.06.2006
(73) Titulaire: Heuliez, 79142 Cerizay Cedex (FR)
(72) Inventeur: Guillez, Jean-Marc, 79140 Cirières (FR); Queveau, Paul, 79140 Montravers (FR); Queveau, Gérard, 79140 Le Pin (FR)
(74) Mandataire: Pichat, Thierry

(56) Documents cités:
- DE-A1- 3 721 895
- DE-A1- 10 227 891
- DE-A1- 10 316 943
- FR-A- 2 694 245
- US-A- 5 542 735
- US-A- 5 975 620

## Description

Le domaine inventif concerné est celui d'un toit escamotable pour un véhicule convertible, le véhicule en lui-même, ainsi qu'un procédé de manoeuvre d'un toit mobile sur un tel véhicule.

Un toit escamotable, ou un toit mobile, dans le sens ici utilisé permet de transformer un véhicule par exemple de type coupé deux places ou berline quatre places en un véhicule par exemple de type cabriolet. Un pick-up découvrable pourrait être également concerné, le toit escamotable étant alors rangé en position découverte, par exemple sur la plate-forme arrière du pick-up ou dans un espace vertical de rangement situé derrière les sièges ou derrière une cloison de séparation avec un espace à bagages.

Dans le domaine ici concerné, il existe des toits escamotables disposés donc sur des véhicules convertibles, voir le document US 5, 975, 620, et comprenant:
- au moins un premier élément (ou panneau) de toit, avant, et un élément de toit arrière qui sont mobiles chacun entre une position de recouvrement dans laquelle ils sont au dessus de l'habitacle du véhicule et une position de rangement atteinte par déplacement desdits élément de toit avant et arrière et dans laquelle ils sont rangés à l'endroit d'un espace de rangement situé à l'écart du dessus de l'habitacle , et
- des bras mobiles fixés à l'élément arrière de toit et mobiles par rapport à lui entre :
   * une première position où ils s'étendent longitudinalement entre l'élément arrière et une zone proche du pare-brise, de part et d'autre et le long de l'élément de toit avant, interposés alors entre le haut de vitres latérales du véhicule et ledit premier élément de toit avant, plus central qu'eux,
   * et une deuxième position où ils sont escamotés à l'écart du pare-brise.

On connaît un tel toit escamotable comprenant typiquement des éléments de toit respectivement avant, intermédiaire et arrière.

Un problème ici posé concerne la possibilité pour un occupant du véhicule de pouvoir profiter de l'environnement extérieur, alors que ce toit est dans sa position précité de recouvrement.

Un problème corollaire concerne la possibilité d'aérer l'habitacle, et de limiter les turbulences d'air dans l'habitacle.

Encore un autre problème concerne la possibilité d'élargir les possibilités de configuration du toit.

Une solution ici proposée à tout ou partie des problème ci-dessus consiste à conseiller:
- qu'une partie au moins dudit premier élément de toit soit mobile par rapport à l'élément de toit arrière et aux bras mobiles, alors que l'élément de toit arrière est fixe en position sur le véhicule, dans sa position de recouvrement et que les bras mobiles sont dans leur dite première position,
- et que ce premier élément de toit avant, ou partie, soit mobile entre une position fermée isolant l'habitacle de l'extérieur à l'endroit dudit élément de toit avant et au moins une position ouverte libérant une ouverture de communication entre l'habitacle et l'extérieur au même endroit.

Concernant lesdits bras mobiles, ils sont donc, toit fermé, visibles de l'extérieur du véhicule en tant qu'éléments latéraux de ce toit.

Favorablement, des moyens libérables vont assurer un verrouillage (libérable) de ces bras mobiles, au moins lorsqu'ils sont dans leur dite première position. A l'avant ce sera entre ces bras et le bâti structurel du véhicule, dans ladite zone proche du pare-brise et à l'arrière, il s'agira, le cas échéant (si nécessaire), d'une liaison entre ces mêmes bras et l'élément de toit arrière.

Pour la mobilité de ladite «au moins une partie de l'élément de toit avant», des moyens de déplacement seront favorablement adaptés à faire monter au moins l'arrière de ladite au moins une partie de l'élément de toit avant lorsqu'elle se déplacera vers sa position ouverte.

De préférence, des ou ces moyens de déplacement seront adaptés à faire monter ladite au moins une partie de l'élément de toit avant par-dessus l'élément de toit situé derrière, lorsqu'elle se déplacera vers sa position ouverte.

Revenant sur l'élément de toit, ou partie d'élément, mobile, sa mobilité sera de préférence plus complète par exemple qu'une rotation autour d'un axe fixe. Elle consistera avantageusement en un déplacement d'ensemble, par exemple par basculement par l'intermédiaire de biellettes, ou encore par translation de long de glissières.

A cet égard, on conseille d'ailleurs que, pour rendre mobile le panneau ouvrant de l'élément de toit avant par déplacement par rapport à ladite structure support:
- le panneau ouvrant est pourvu de coulisseaux avant et de coulisseaux arrière,
- des séries de glissières latérales superposées s'étendent entre des zones avant et arrière de la structure support, de part et d'autre de l'axe longitudinal,
- et des moyens à bascules sont disposés localement sur les séries de glissières pour décaler en hauteur les coulisseaux arrière et/ou avant dudit élément de toit avant, vers une autre parmi lesdites glissières superposées desdites séries, lorsque l'élément de toit avant est déplacé vers l'arrière.

Lesdits moyens à bascules correspondent à la partie caractérisante de la revendication 1.

Ainsi, on limitera les risques de coincement entre l'élément de toit ouvrant et un élément de toit adjacent et/ou les bras et, si l'on fait changer de niveau tant les coulisseaux avant qu'arrière lors de l'ouverture de cet élément de toit ouvrant, on optimisera le volume de rangement occupé par les éléments de toit rangés.

On conseille en outre ce qui suit :
- le toit comprend au moins un deuxième élément (ou panneau) de toit, intermédiaire, s'étendant d'une part entre le premier élément, avant, et l'élément de toit arrière, dans ladite position de recouvrement,
- une partie au moins de l'élément intermédiaire est mobile par rapport à l'élément de toit arrière et aux bras mobiles, alors que l'élément de toit arrière est fixe en position sur le véhicule, dans sa position de recouvrement, et que cet élément de toit arrière et lesdits bras mobiles sont liés au bâti structurel par exemple par l'intermédiaire de moyens de verrouillage,
- et le deuxième élément est mobile entre une position fermée isolant l'habitacle de l'extérieur à l'endroit du deuxième élément intermédiaire de toit et au moins une position ouverte libérant une ouverture de communication entre l'habitacle et l'extérieur au même endroit.
   En outre, on que le toit pourra comprendre un troisième élément (ou panneau) de toit s'étendant à l'arrière du premier ou du deuxième élément de toit et qui est porté par l'élément de toit arrière, ledit troisième élément de toit étant mobile par rapport à l'élément de toit arrière, alors que l'élément de toit arrière est fixe en position sur le véhicule,
- le troisième élément de toit étant mobile entre une position fermée isolant l'habitacle de l'extérieur à l'endroit de ce troisième élément et une position ouverte libérant une ouverture de communication entre eux l'habitacle et l'extérieur au même endroit.

L'ouverture complète, par coulissement vers l'arrière, de l'élément de toit avant ne pourra alors s'opérer que s'il y eu précédemment ouverture par coulissement vers l'arrière des autres panneaux (deuxième, voire troisième), ces éléments ouvrants de toit devant en outre avoir été ainsi ouverts pour que l'on puisse ensuite escamoter les bras mobiles et découvrir entièrement l'habitacle par basculement, vers ladite zone de rangement, de l'élément de toit arrière suivi de l'(des) autre(s) élément(s) de toit.

Revenant sur les bras latéraux mobiles, on notera qu'avantageusement, dans leur deuxième position (escamotée):
- ces bras seront rétractés vers l'élément de toit arrière dont ils seront alors immédiatement proches,
- et même, de préférence, le véhicule et le toit présentant un plan de symétrie commun contenant l'axe longitudinal, lesdits bras mobiles seront montés pivotants sur l'élément arrière de toit et seront repliés transversalement par rapport audit plan de symétrie, en particulier l'un au dessus de l'autre.

A noter également que ce toit escamotable pourra venir en substitution d'un toit escamotable traditionnel, c'est-à-dire conforme aux premières caractéristique donnés en tout début de description sans toutefois d'élément de toit ouvrant mobile comme indiqué ci-avant.

Dans les figures jointes qui illustrent la présente description,
- la figure 1 montre de dessus un véhicule convertible comprenant quatre éléments rigides de toit, ici dans l'état de recouvrement complet de l'habitacle,
- la figure 2 montre les bras latéraux en train de pivoter,
- les figures 3 et 4 montrent de côté le même toit que fig.1, respectivement en position entièrement fermée et avec ses panneaux ouvrants ouverts au dessus de l'élément arrière de toit,
- la figure 5 montre schématiquement de côté le toit de la figure 1, dans une position de rangement possible, habitacle entièrement dégagé,
- la figure 6 montre de dessus une demi-vue de l'élément de toit avant, flèche VI de la figure 3,
- la figure 7 est la coupe VII-VII de la figure 6,
- la figure 8 est une vue dans le sens de la flèche VIII de la figure 7,
- les figures 9,10,11 et 12 montrent un tronçon de glissières superposées, avec un système à bascule dans quatre situations différentes,
- la figure 13 est une coupe comme la figure 6 montrant trois glissières pour trois éléments de toit ouvrants, ici côte à côte,
- la figure 14 montre le toit de la figure 1 en position de rangement dans l'espace arrière de rangement, ceci dans une configuration alternative à celle de la fig.5,
- et les figures 15 et 16 montrent respectivement différentes configurations d'ouverture des panneaux ouvrants d'un toit et un dispositif de commande en translation de ces panneaux, avec sélection du ou des panneaux concernés et adaptation de la vitesse de translation.

Le véhicule décrit étant symétrique par rapport au plan médian vertical de symétrie 100 qui contient l'axe longitudinal 100a, on décrira indifféremment le côté gauche et le côté droit de toute partie du véhicule comme le côté latéral et on pourra compléter par symétrie la description.

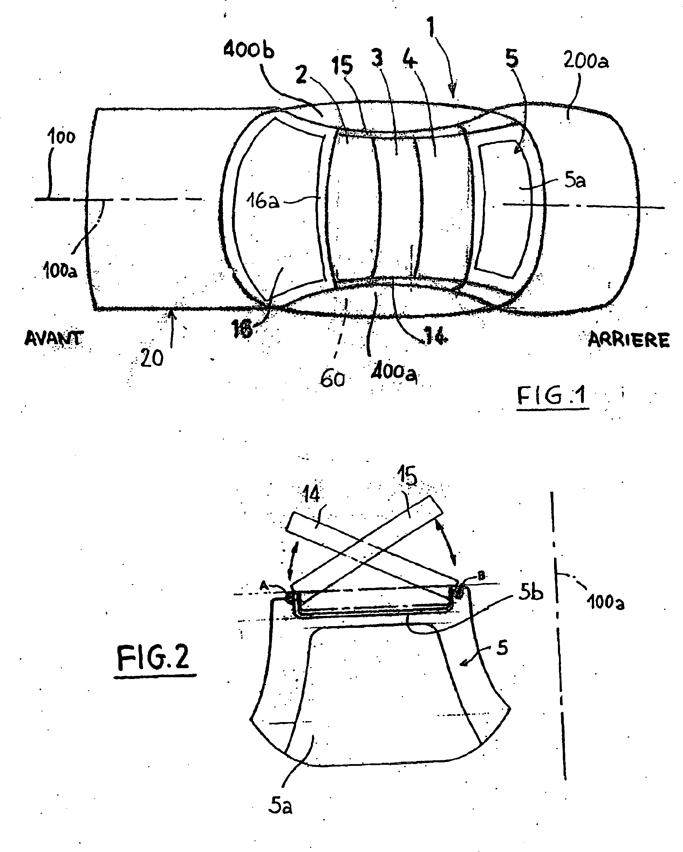

La figure 1 schématise un véhicule convertible comprenant un toit escamotable 1.

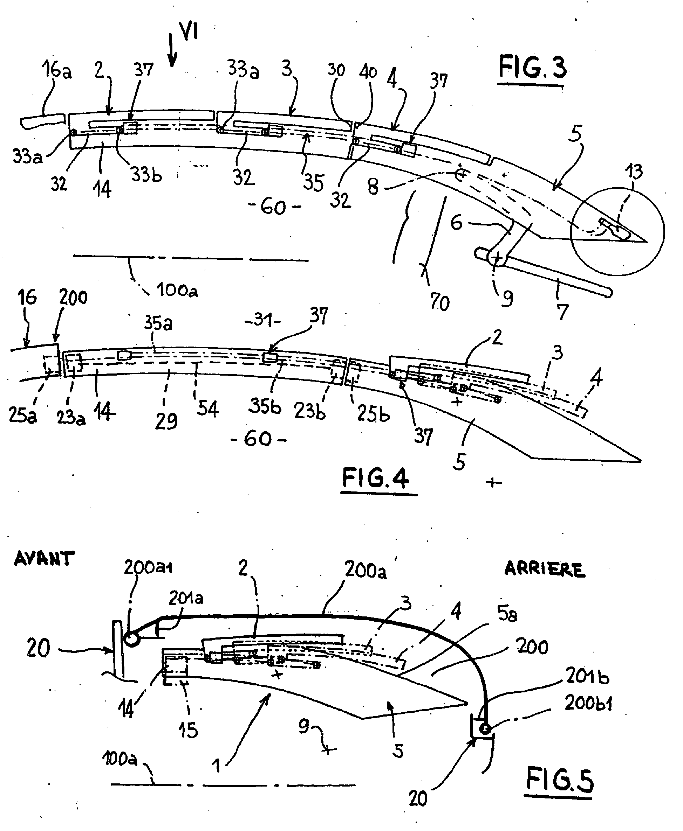

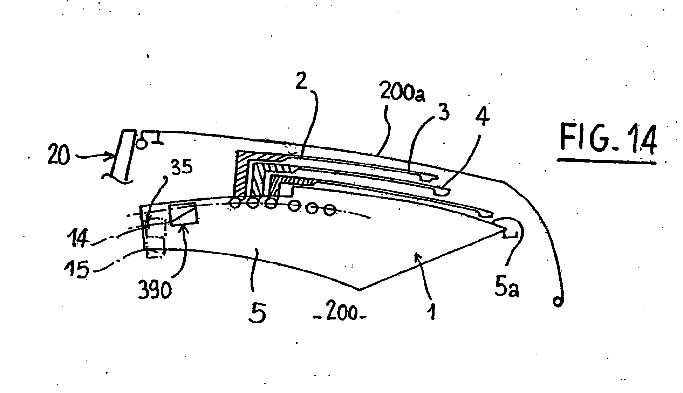

Il peut s'agir d'un toit basculant, éventuellement oscillo-coulissant. il comprend ici un élément de toit avant 2, deux éléments intermédiaires de toit 3, 4 et un élément de toit arrière 5, avec sa lunette arrière 5a, tous déplaçables entre une position de recouvrement dans laquelle ils recouvrent l'habitacle 60 du véhicule et une position de rangement dans laquelle ils sont rangés à l'intérieur du coffre arrière 200. Toutefois, le rangement du toit avec ses éléments de toit rapprochés comme sur la figure 14 pourrait intervenir à l'endroit d'une autre zone de rangement, comme juste derrière les sièges 70 (arrière s'il y a plusieurs rangées ; fig.3) ou sur une plate-forme arrière de pick-up. Bien entendu, les véhicules mono-corps ou bi-corps, type break..., sont également ici concernés.

Le capot 200a du coffre 200 s'ouvre de préférence vers l'arrière et l'avant. Il est ici basculant sur le bâti structurel 20 du véhicule, autour d'un axe avant 200a1 transversal à l'axe longitudinal 100a, pour un accès aux bagages du coffre, et autour d'un axe transversal arrière 200b1, pour le rangement du toit 1 ici dans le coffre. Des moyens réversibles de verrouillage connus permettent un tel verrouillage libérable à l'endroit ou à proximité de ces axes 200a1,200b1 (voir par exemple verrou 201a,210b à l'avant et à l'arrière sur le capot, figure 5).

Selon d'autres modes de réalisation, le toit peut ne comprendre aucun élément intermédiaire, un seul, ou plus de deux. Par ailleurs, l'élément de toit arrière peut être unique comme ici ou comprendre en particulier un élément de toit arrière central flanqué de deux éléments de toit arrière latéraux, dans la position de recouvrement (toit fermé).

Figure 3, l'élément arrière 5 comprend un bras pivotant 6 engagé dans une glissière 7 s'étendant à l'intérieur du coffre 200 et fixée au bâti structurel 20 (paroi latérale intérieure de carrosserie par exemple). Le bras pourrait être un doigt. Le bras pivote en 8 et 9 autour d'axes perpendiculaire à 100a.

Le bras (motorisé) 6 et la glissière 7 guident et entraînent le déplacement de l'élément arrière 5 entre ses positions de recouvrement et de rangement.

On appelle bâti structurel 20 les pièces qui définissent la structure du véhicule, en particulier la carrosserie, le châssis, les montants.

L'élément arrière 5 est également relié aux éléments intermédiaires 3,4 et avant 2 par l'intermédiaire de bras escamotables latéraux 14,15.

En position de recouvrement, figure 1, les deux bras mobiles 14, 15 s'étendent, ici en position active déployée, le long des côtés latéraux des éléments de toit 2, 3, 4, entre l'avant de l'élément arrière 5 et l'arrière du pare brise 16 du véhicule (plus précisément, a priori la baie ou traverse supérieure transversale 16a de pare brise).

Il s'agit donc d'éléments latéraux (ou de parties latérales) du toit, alors visibles de l'extérieur du véhicule. Dans cette position active déployée, ils sont interposés entre le haut des vitres latérales, telles 400a,400b figure 1, et les autres éléments de toit plus centraux, tels que 2,3,4 fig.1, situés alors devant l'élément arrière 5 de toit, longitudinalement entre lui et la traverse supérieure 16a de pare brise.

Ces bras mobiles, portés par l'élément arrière de toit 5, sont escamotables à l'écart du pare-brise et des autres éléments de toit, pour le rangement du toit à l'endroit de sa zone de rangement , ici 200.

Ils sont pour cela ici rétractables, par exemple de façon télescopique ou par rotation, afin d'être immédiatement proches du dessous et/ou du bord avant 5b de l'élément arrière 5, dans leur état escamoté (figs.2,5).

Les bras 14, 15 sont ici montés pivotants, chacun selon un axe de rotation A, B, situé sur l'avant de l'élément arrière 5. Les axes de rotations A, B sont non parallèles et ici sensiblement verticaux et perpendiculaires à l'axe 100a.

Lors de l'escamotage du toit, représenté sur les figures 2 puis 5, les deux bras 14, 15 pivotent autour de leur axe de rotation A, B d'une position longitudinale sensiblement parallèle à l'axe 100a (position de recouvrement du toit, figs.1,3) à une position transversale (position de rangement du toit, fig.5).

Les axes de rotations A, B étant avantageusement non parallèles, le mouvement des bras 14, 15 se fait alors dans deux plans distincts de sorte que les bras 14, 15 peuvent être repliés en se chevauchant ou l'un devant l'autre.

Les bras 14, 15 sont au moins verrouillés à l'avant, de préférence en haut du pare-brise 16 selon des moyens de verrouillage connus. Ce peut être ceux de FR-A-2 851 750.

Des mêmes moyens moteurs 13 peuvent être utilisés pour assurer l'entraînement des bras et pour provoquer le verrouillage et le déverrouillage du toit.

En position de recouvrement, les bras 14, 15 sont donc au moins verrouillés au pare-brise 16 (baie 16a) selon des moyens de verrouillage connus, ce qui verrouille dans la même position l'élément arrière 5 de toit. Et, dans cette position de recouvrement, lesdits éléments de toit 2, 3, 4, 5 sont disposés l'un derrière l'autre, leurs bords transversaux en regard, tels que 30 et 40 fig.3 étant sensiblement bord à bord.

Pour les éléments de toit et/ou les bras, la solution de verrouillage libérable de FR-A-2 820 692 ou FR-A-2 851 750 peut ainsi être ici appliquée. FR-A-2 846 949 illustre également un verrouillage et une cinématique de toit ici applicable et FR-A-2 851 744 décrit un mode de réalisation utilisable de la commande et du verrouillage des bras latéraux.

De façon connue, le déplacement de l'élément arrière 5 vers le coffre arrière entraîne celui de l'élément intermédiaire 4 sur l'élément arrière 5, et des éléments intermédiaire 3 et avant 2 respectivement sur les éléments intermédiaire 4 et 3.

En position de rangement de la figure 5, les éléments de toit sont les uns au dessus des autres, de haut en bas : 2, 3, 4, 5.

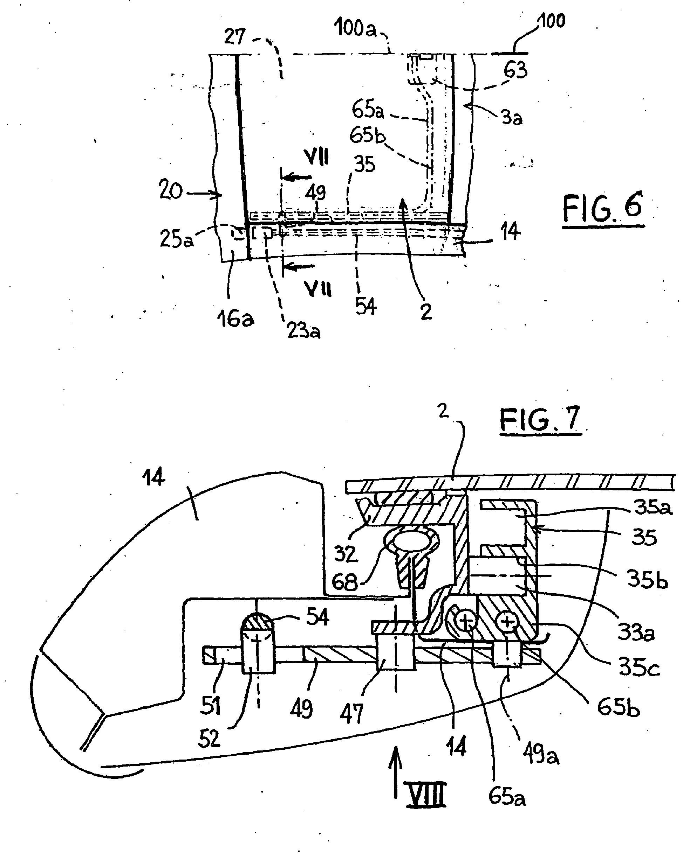

A partir de la figure 6 et de celles associées, on va maintenant présenter une structure de bras, par exemple 14, et d'élément de toit intégralement ouvrant, par exemple 2, en imaginant aisément la demi-vue complémentaire, suivant la symétrie par rapport au plan médian vertical 100.

Chaque élément 2, 3, 4 peut être ouvrant et ouvert si l'élément de toit immédiatement derrière est lui-même ouvert.

Les figures 3, 7 et 8 montrent que chaque élément de toit ouvrant concerné, ici l'élément avant 2, peut être pourvu de part et d'autre d'un chariot 32 fixé sous lui. Chaque élément de toit ouvrant ainsi réalisé est verrouillable de façon libérable au bâti structurel 20 (directement ou via les bras latéraux) et/ou à l'élément de toit adjacent.

Ici, les bras latéraux peuvent n'être verrouillables qu'à l'avant, à la baie 16a, étant, à l'arrière, portés par l'élément de toit arrière 5. Un verrouillage avant/arrière est toutefois envisageable, comme schématisé fig.4, avec des moyens de verrouillage avant 23a,25a complémentaires portés par, ici, le bras 14 et la traverse 16a et des moyens de verrouillage arrière 23b,25b complémentaires portés par, ici, le bras 14 et l'élément de toit arrière 5, l'entraînement coordonné étant assuré par la tringle 54.

Tandis que dans la position illustrée de recouvrement de la figure 3, les éléments de toit 2,3,4,5 s'étendent sensiblement dans la continuité les uns des autres et les uns derrières les autres, globalement le long de l'axe longitudinal 100a (trait plein, recouvrement complet de l'habitacle), les éléments ouvrants 2,3,4 sont montrés figure 4 dans leur état ouvert où ils libèrent chacun une ouverture, ici une large ouverture 29, de communication entre l'habitacle 6 et l'extérieur 31 du véhicule. Fig.6, l'ouverture du seul élément 2 est repérée 27.

Si l'on considère d'ailleurs cet élément ouvrant 2, il est déplaçable d'avant en arrière, et inversement, par rapport aux bras 14, 15, eux-mêmes alors verrouillés au bâti, à l'avant, en position fixe, et donc étendus le long notamment des différents éléments 2, 3, 4.

Pour ce déplacement, le chariot 32 illustré est pourvu de coulisseaux avant 33a et arrière 33b montés coulissants le long d'une série de glissières superposées 35 comprenant une glissière supérieure 35a et une glissière inférieure 35b.

Les glissières s'étendent dans des plans parallèles au plan de symétrie 100.

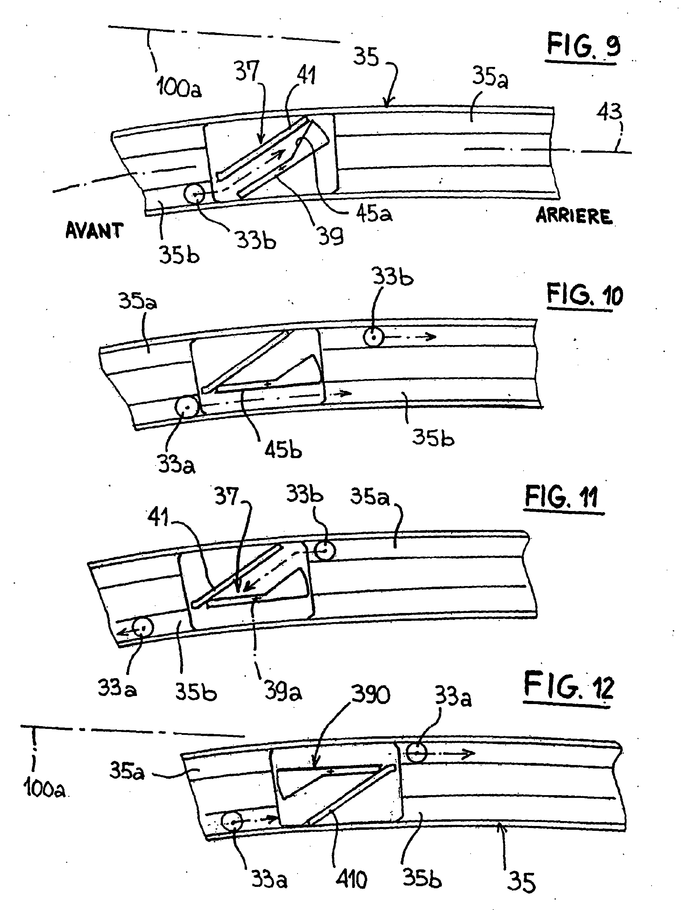

Figures 9 à 11, des moyens à bascules 37 permettent de faire changer de niveau de glissières les coulisseaux arrières 33b.

Ces moyens à bascules comprennent un plateau rotatif 39 à axe de rotation perpendiculaire à 100a, et un guide incliné fixe 41.

Le plateau rotatif présente une angulation sur sa face supérieure et un plan en surface inférieure. Il pivote autour d'un axe 39a parallèle à l'axe longitudinal 100a.

Le guide incliné 41 s'étend de biais par rapport à la direction générale 43 d'allongement des glissières 35a, 35b.

Les moyens à bascules 37 sont situés derrière les coulisseaux arrière 33b quand l'élément ouvrant considéré est fermé (voir figure 3).

Quand, toit fermé, on ouvre l'élément ouvrant en le reculant vers l'élément arrière 5, le plateau rotatif 39 est alors incliné dans sa position de la figure 9, du fait de la fermeture précédemment intervenue.

Du fait de cette position de biais du plateau rotatif, chaque coulisseau arrière 33b passe de la glissière inférieure 35a (dans laquelle était engagé jusqu'à présent tous les coulisseaux) à la glissière supérieure 35b.

Passant sur le plan incliné arrière 45a du plateau rotatif, qui s'étend alors en travers de son chemin dans l'état pivoté de biais de ce plateau, le coulisseau arrière concerné replace à l'horizontale la surface inférieure 45b du plateau rotatif (figure 10), de sorte que le coulisseau arrière 33a passe lui-même ensuite sous le plateau rotatif et demeure donc au même niveau d'élévation, donc dans la glissière inférieure 35a.

L'élément de toit ouvrant qui continue alors à reculer demeure dès lors de biais par rapport aux bras 14,15 et donc à la position sensiblement horizontale qu'il occupait fermé.

Eventuellement, par souci de gain d'encombrement en particulier, on peut aussi prévoir, en fin de course vers l'arrière, de décaler en hauteur l'avant de l'élément de toit qui recule, au même niveau d'élévation que le bord arrière. Les figures 12 et en partie 14 montrent que, pour cela, on peut prévoir en un autre endroit des glissières d'autres moyens à bascules 390 et plan incliné 410 identiques aux précédents, mais montés inversés, c'est-à-dire basculés de 180° autour d'un axe parallèle à l'axe 100a. Dans le sens de l'ouverture du panneau, ce sont alors les coulisseaux avant 33a qui montent, les coulisseaux arrière, déjà plus à l'arrière, restant au même niveau. Au retour, lors de la fermeture du panneau, lesdits coulisseaux avant reviennent au niveau d'origine, toit fermé (figure 3).

Revenant vers cette position fermée, l'élément de toit 2 ici considéré se verrouille en bout de course vers l'avant.

Les figures 6 à 8 montrent ensemble une solution simple et performante pour ce verrouillage réversible et, ici, également pour la commande des verrous libérables 23a (voire 23b). Ici, chaque chariot 32 portent une butée 47 qui pousse un levier 49 articulé transversalement aux axes 100a et 43, autour d'un axe de pivotement sensiblement vertical 49a fixe sur la série de glissières concernée, ici 35. Le levier 49 s'étend sous cette série de glissières (figure 7).

Vers son extrémité libre, le levier 49 présente un orifice oblong 51 recevant un doigt 52 de transmission de mouvement à une tige, voire un câble, 54 de commande desdits moyens de verrouillage réversible, 23a, voire 23b.

Un doigt de sécurité 61, commandé par exemple électriquement à partir du tableau de bord de l'habitacle, bloque en outre de préférence la butée 47 contre la surface du levier 49, dans l'état fermé verrouillé de l'élément de toit 2 ici considéré.

Ainsi, avantageusement, pour leurs manoeuvres d'ouverture/fermeture, bras actifs et de préférence verrouillés (figs.3 et 4), chaque élément ouvrant du toit comprendra des moyens de verrouillage réversible (ici indirect) vis-à-vis des bras et/ou du bâti 20 qui seront indépendants, au moins fonctionnellement, des moyens de verrouillage réversible prévus par ailleurs pour ces bras. Par suite, on pourra maintenir les bras 14,15 verrouillés au moins à l'avant et ouvrir/fermer à volonté les éléments ouvrants.

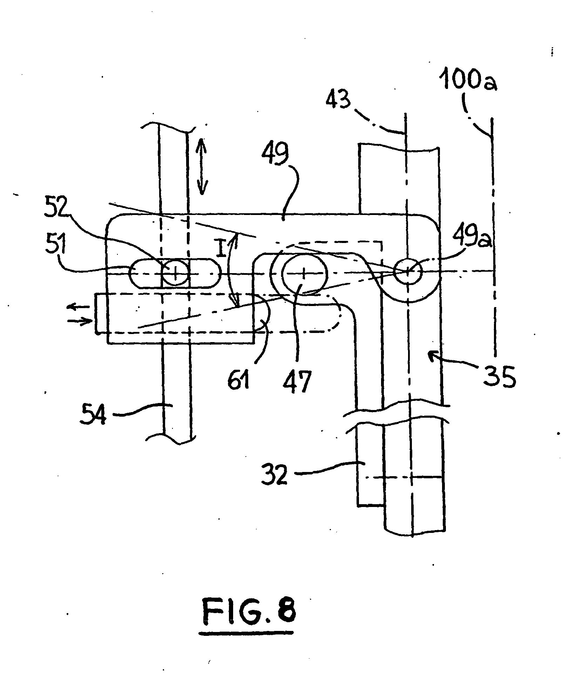

L'angle de débattement I figure 8 permet de verrouiller ou déverrouiller, devant, voire derrière, le bras 14 vis-à-vis du bâti 20 et/ou de l'élément de toit arrière, tout en verrouillant ou libérant l'élément 2.

De préférence, le coulissement de l'élément de toit 2 suivant l'axe 43 s'opérera par l'intermédiaire d'un moteur électrique 63 fixé à lui.

Le moteur 63 commande les chariots 32 par l'intermédiaire de moyens de traction, poussée ou rotation se présentant sous la forme de tiges (de préférence articulables) ou de câbles flexibles, comme ceux figurés en 65a et 65b sur les figures 7 et 12.

Ces moyens de transmission, tels que les câbles 65a, 65b, passeront avantageusement dans l'âme des structures de glissières, ici dans une partie 35c située sous les zones de coulissement des glissières 35a, 35b.

Figure 3, les éléments de toit 2, 3, 4, alors fermés, suivent la courbure de leur bras latéral 14 montré, auquel la série de glissières 35 est fixée latéralement.

Fig.7, l'élément de toit 2 coulisse au-dessus du joint 68 (sensiblement) contre lequel porte, ou glisse, le chariot 32.

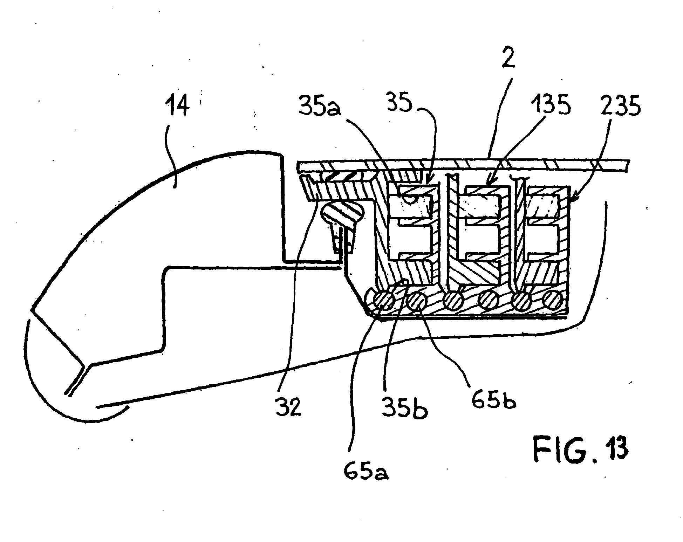

La figure 13 montre une solution à trois glissières 35, 135, 235 double (telles que 35a, 35b), côte à côte, pour trois éléments de toit avant et intermédiaires ouvrants (tels que 2, 3, 4 ; seul l'élément 2 est montré).

Les trois glissières sont ici monoblocs. Elles pourraient avantageusement être dissociées en particulier pour suivre des courbures différentes et/ou être décalées en hauteur.

Quant à la figure 14, elle montre, en alternative donc à la fig.5, le toit 1 rangé dans le coffre 200. L'élément de toit arrière 5 est sensiblement horizontal, surmonté successivement par les éléments 4, 3, 2 eux-mêmes sensiblement horizontaux et avec une disposition et une courbure à peu près parallèle à celle, supérieure, 5a de L'élément de toit arrière 5. Pour atteindre cette situation, on a utilisé, en plus des bascules 37, celles 390 de la fig.12, les coulisseaux sont alors tous placés sur un même niveau de glissières 35.

Figs.14 et 5, les élément de toit ouvrants 2,3,4 sont tous dans leur état ouvert, déplacés vers l'arrière, au-dessus de la surface repérée 5a de l'élément arrière 5. Les bras latéraux 14, 15 sont alors dans leur état escamoté, ici repliés transversalement à 100a, sous l'élément 5. Le toit ouvrant ainsi réalisé présente donc différentes possibilités de positions et l'on peut réaliser l'un ou plusieurs des éléments de toit à l'aide d'une vitre.

En plus de son verrouillage libérable et indirect précité, par les bras latéraux 14, 15, l'élément arrière de toit pourrait, en particulier à l'arrière, être directement verrouillé à une partie du bâti 200, ceci en position fixe de recouvrement comme sur les figures 1,3,4, par au moins un verrou indépendant libérable.

D'un état ouvert du toit, rangé par exemple comme sur la figure 5, sa fermeture s'opère comme suit :

Typiquement par basculement et ici également par coulissement, l'élément arrière 5 est amené au-dessus de l'arrière de l'habitacle 60. Ces bras latéraux 14, 15 sont déployés vers l'avant, comme on peut l'imaginer au vu de la figure 2. Les éléments ouvrant du toit 2, 3, 4 sont encore en position reculée arrière. On se retrouve alors dans la situation de la figure 4, avec la large ouverture 29 dégagée entre les bras latéraux 14, 15, la traverse supérieure de pare-brise 16 à l'avant et l'élément 5 de toit, à l'arrière. Si des moyens dépendant de verrouillage des bras 14, 15 sont portés par ceux-ci, au moins à l'avant, on peut alors procéder au verrouillage desdits bras au bâti structurel 2, à proximité immédiate de la partie haute du pare-brise. Sinon, les bras ne sont pas encore verrouillés à l'avant, bien qu'ils soient étendus dans leur position active.

Dans cette dernière hypothèse, on préfère alors commander automatiquement une fermeture des éléments ouvrant concernés, ici 2, 3 et 4, par déplacement en direction du pare-brise 16.

Dans une solution à glissière (telle que 35) ici plus particulièrement conseillée, les éléments 2, 3, 4 coulissent ensemble ou successivement jusqu'à venir se placer les uns derrière les autres, dans une continuité, comme montré sur la figure 3, en passant de préférence sur les bascules précitées 39, voire 390, afin de redescendre sensiblement au niveau des bras, au moins pour ce qui concerne leur partie arrière.

Si, comme dans la solution ci-avant des figures 7 et 8 en particulier c'est la butée finale avant de l'élément de toit avant qui verrouille les bras latéraux 14, 15, alors cette fin de course du chariot de l'élément avant 2 de toit fait pivoter chaque levier 49 est commande ainsi en verrouillage au moins les moyens de verrouillage avant 23a qui engage alors leurs moyens complémentaires 25a. On se retrouve alors dans la solution entièrement fermée et verrouillée (tant des bras latéraux que des éléments de toit ouvrant) de la figure 3. L'élément arrière 5 est alors bien entendu également dans sa position de recouvrement.

Pour ouvrir au moins l'élément de toit avant 2 (même remarque pour les éléments de toit intermédiaires 3 et 4 s'il existent), on va alors favorablement déverrouiller un moyen de verrouillage indépendant (tel par exemple que le loquet 61 de la figure 8), ce qui va permettre de faire reculer les chariots 32 de cet élément de toit, sans entraîner le déverrouillage des bras latéraux 14, 15. Dans la solution représenté sur les figures 3 et 4, pour un recul complet de l'élément de toit avant 2, il faudra avoir reculé au moins partiellement les éléments situés derrière.

Pour ranger entièrement le toit et revenir à la situation de la figure 5, on procédera à l'inverse de ce qui a été présenté ci-avant.

C'est-à-dire que, partant par exemple de la situation totalement fermée de la figure 3, on passe de la situation de la figure 4 avec les éléments de toit 2, 3, 4 ouverts et ramenés partiellement l'un au-dessus de l'autre au-dessus de l'élément arrière 5 encore en position de recouvrement, avec les bras 14, 15 actifs, déployés longitudinalement jusqu'à la baie de pare-brise (et de préférence encore verrouillée à elle), après quoi on enchaîne les opérations d'escamotage à l'inverse de la description précédente, jusqu'à replacer le toit à l'endroit de sa zone de rangement prévu.

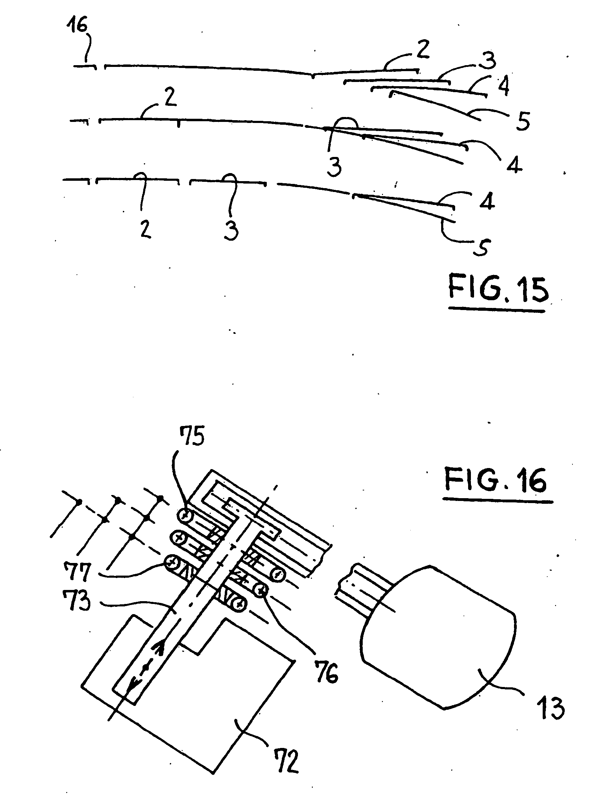

On voit figure 15 que peuvent être ouvert, en position de recouvrement de l'élément 5, seul le troisième panneau 4 (en bas), les deuxième et troisième panneaux 3, 4 (milieu) ou les premier, deuxième et troisième panneaux 2, 3, 4 (en haut).

Pour leur commande, l'utilisation du moteur 13 est conseillée. Figure 16, il est couplé à un sélecteur 72 qui commande un arbre ou crabot 73 de sélection qui, en fonction de sa position axiale (voir double flèche), permet de choisir d'entraîner un, deux ou les trois panneau 4, 3, 4 ou 2, 3, 4 comme montré fig.15. Des pignons 75,76,77 de tailles différentes en fonction de la position des panneaux, et donc de leur course à parcourir pour s'ouvrir ou se fermer, assurent la transmission du mouvement, suivant la position axiale du crabot.

Plus le panneau a une longue course, plus sa vitesse de translation sera rapide (grand pignon 75). Le petit pignon 77 sera pour le panneau 4.

Concernant le procédé de manoeuvre du toit mobile dont on a fait état ci-avant, dans une situation visant à fermer le toit à partir de sa position ouverte de rangement, dans laquelle lesdits éléments de toit sont ensemble situés à l'écart du dessus de l'habitacle 60,
a) - on déplace les éléments de toit avant 2,3,4.. et arrière 5 depuis leur position ouverte vers une position de recouvrement de l'habitacle dans laquelle ils se placent donc au-dessus de cet habitacle, avec l'élément de toit avant 2 devant l'élément de toit arrière, et
b) - on verrouille intégralement l'élément de toit avant, ou au moins une première partie de celui-ci, à un élément de toit adjacent 3, 4..., tel que l'élément de toit arrière 5, et/ou au bâti structurel 20, ceci directement ou indirectement, l'élément de toit arrière demeurant dans sa position de recouvrement, ensuite, à partir de cette étape b), pour libérer l'ouverture de communication recherchée entre l'habitacle et l'extérieur du véhicule à l'endroit au moins de l'élément de toit avant:
c) - on déverrouille soit intégralement l'élément de toit avant par rapport à l'élément de toit adjacent et/ou au bâti structurel, directement ou indirectement (via les bras 14,15), soit au moins ladite première partie de cet élément de toit avant par rapport à une deuxième partie de cet élément de toit avant 2,
d) - on bouge, par rapport à l'élément de toit arrière 5 toujours en position de recouvrement, l'élément de toit avant 2 déverrouillé, ou sa dite première partie elle-même déverrouillée, de manière à passer d'un état fermé de l'élément de toit avant isolant l'habitacle 60 de l'extérieur à l'endroit de cet élément de toit avant à un état ouvert libérant ladite ouverture de communication 27,29 .

De préférence et comme déjà indiqué, on bougera l'élément de toit avant 2, ou sa dite première partie, en le(la) déplaçant en direction de l'élément de toit arrière 5. Pour cela, compte tenu de ce qui précède, on conseille bien sûr, alors que l'élément de toit arrière 5 est toujours en position de recouvrement, de faire coulisser l'élément de toit avant 2, ou sa dite première partie déverrouillée, le long desdites glissières 35.

Et on prévoit encore, grâce aux systèmes à bascules déjà présentés, de décaler d'abord en hauteur un bord arrière de l'élément de toit avant 2, ou de sa dite première partie, par rapport à un bord avant de l'élément de toit arrière, et de conserver une inclinaison à cet élément de toit avant, ou à sa dite première partie, pendant son déplacement vers l'élément de toit arrière 5.

On notera que dans un tel procédé de manoeuvre, lesdites première et deuxième parties de l'élément de toit ouvrant concerné seront avantageusement respectivement un panneau mobile de toit et une structure support pour ce panneau, en particulier un cadre support recevant ledit panneau mobile lorsqu'il est fermé. Sous le panneau de toit seront alors fixés les chariots 32 dont l'arrivée en fin de course, comme sur la figure 8, commandera le verrouillage du panneau et du cadre support.

Les vues des figures 7 et 8 s'appliqueront alors à l'identique, les bras latéraux (tels que 14) devenant, sur la figure 7, le cadre support qui pourra donc se verrouiller de manière libérable, à l'avant à la baie supérieure de pare-brise 16a (puisqu'on suppose ici faire référence à l'élément de toit avant 2) et, à l'arrière, au cadre support de l'élément de toit adjacent ou à l'élément arrière 5 de toit (s'il n'y a que deux éléments de toit 2,5) .

Les figures 9 à 12 pourront également s'appliquer à l'identique pour le déplacement coulissé du panneau ouvrant concerné. Même remarque pour les figures 13 et 14

## Revendications

1. Toit escamotable disposé sur un véhicule convertible présentant un axe longitudinal et comprenant un habitacle, un bâti structurel (20), des vitres latérales (400a,400b) et un pare-brise (16), ce toit étant tel que :
- il comprend un premier élément rigide de toit, avant, (2) et un élément rigide de toit arrière (5)) où est située la lunette arrière (5a) du véhicule, tous deux mobiles individuellement entre une position de recouvrement dans laquelle ils sont au dessus de l'habitacle du véhicule et une position de rangement atteinte par déplacement desdits élément de toit avant et arrière et dans laquelle ils sont rangés à l'endroit d'un espace de rangement situé à l'écart du dessus de l'habitacle , et
- il comprend en outre des bras mobiles (14, 15) fixés à l'élément arrière (5) de toit et mobiles par rapport à lui entre :
* une première position où ils s'étendent longitudinalement entre l'élément arrière (5) et une zone proche du pare-brise (16), de part et d'autre et le long de l'élément de toit avant (2), interposés alors entre le haut des vitres latérales du véhicule et ledit premier élément de toit avant, plus central qu' eux,
* et une deuxième position où ils sont escamotés à l'écart du pare-brise,
- alors que l'élément de toit arrière (5) est dans sa position de recouvrement et que lesdits bras mobiles sont dans leur première position, une partie au moins dudit premier élément de toit peut être déplacé par rapport à l'élément de toit arrière et aux bras mobiles (14,15), le long d'eux, par des coulisseaux (33a,33b) engagés dans des séries de glissières latérales (35), fixées aux bras mobiles et se prolongent jusque dans l'élément arrière de toit (5),
- et ladite au moins une partie de l'élément de toit avant (2) est alors mobile entre une position fermée isolant l'habitacle de l'extérieur à l'endroit dudit élément de toit avant et au moins une position ouverte libérant une ouverture de communication entre l'habitacle et l'extérieur au même endroit,
**caractérisé en ce que**, sur les bras mobiles, les glissières (35) sont superposées par séries, et des moyens à bascules (37,39,41,390) sont prévus pour faire changer de niveau de glissières les coulisseaux, entre lesdites positions fermée et ouverte.

2. Toit escamotable selon la revendication 1, **caractérisé en ce que**, par séries, on trouve deux glissières (35) superposées, la glissière supérieure (35a) s'étendant le plus loin vers l'arrière dans l'élément arrière de toit (5).

3. Toit escamotable selon l'une des revendications précédentes, **caractérisé en ce que** lesdites glissières (35) dans lesquelles sont engagés les coulisseaux (33a,33b), tant en position ouverte qu'en position de rangement dudit premier élément de toit, sont fixes sur l'élément arrière de toit (5).

4. Toit escamotable selon l'une des revendications précédentes, **caractérisé en ce que** les coulisseaux (33a,33b), glissières (35) et moyens à bascules (37,39,41,390) pour faire changer de niveau de glissières ces coulisseaux sont adaptés pour que l'élément avant de toit, ou ladite partie de cet élément de toit avant, passe dessus l'élément de toit arrière (5), en reculant de sa position fermée vers sa position ouverte.

5. Toit escamotable selon l'une des revendications précédentes, **caractérisé en ce qu**'en position de rangement, l'élément avant de toit (2) se trouve au-dessus de l'élément arrière de toit (5).

6. Toit escamotable selon l'une des revendications précédentes, **caractérisé en ce que** lesdits bras mobiles (14,15) sont montés pivotants sur l'élément arrière (5) de toit et, dans leur deuxième position, sont rétractés vers l'élément de toit arrière (5) dont ils sont alors immédiatement proches, en étant repliés transversalement par rapport à l'axe longitudinal (100a).

7. Toit escamotable selon l'une au moins des revendications précédentes, **caractérisé en ce que** sur l'élément de toit concerné, lesdits coulisseaux comprennent des coulisseaux avant et arrière (33a,33b),

8. Toit escamotable selon l'une au moins des revendications précédentes, **caractérisé en ce que** lesdits moyens à bascules (37,39,41,390) faisant changer de niveau les coulisseaux dans les glissières comprennent des moyens à bascules (39,390) qui décalent en hauteur les coulisseaux dudit élément de toit considérée au passage de l'élément de toit concerné ou de sa dite partie mobile ouvrante.

9. Toit escamotable selon l'une au moins des revendications précédentes, **caractérisé en ce que** ledit élément avant de toit (2,3,4) ou sa partie mobile entre lesdites positions fermée et ouverte glisse le long des glissières (35) par l'intermédiaire d'un chariot (32) portant les coulisseaux (33a,33b) et qui est verrouillable latéralement de façon réversible vis-à-vis des bras (14,15) et/ou du bâti (20), dans l'état fermé de cet élément avant de toit (2).

10. Véhicule convertible pourvu du toit escamotable selon l'une quelconque des revendications précédentes.

11. Procédé de manoeuvre d'un toit mobile incluant celui selon la revendication 1 sur un véhicule convertible comprenant un bâti structurel (20), un habitacle (60), un pare-brise (16), le toit comprenant au moins un élément rigide de toit avant (2) et un élément rigide de toit arrière (5) où, est située la lunette arrière (5a) du véhicule, dans lequel procédé,
a) - on rend mobile le toit par rapport au bâti structurel (20) entre une position de recouvrement dans laquelle ses dits éléments (2,3,4,5) sont au dessus de l'habitacle du véhicule, avec alors l'élément de toit avant (2) devant l'élément de toit arrière (5), et une position de rangement derrière l'habitacle qui est atteinte en reculant et en superposant l'élément de toit avant (2), et le cas échéant tous les autres éléments de toit (3,4) situés en avant de l'élément de toit arrière (5) dans leur état fermé, par-dessus de l'élément de toit arrière et en déplaçant l'ensemble desdits éléments de toit jusqu'à cette position de rangement,
b) - on rend également mobile par rapport à l'élément de toit arrière (5), alors en position de recouvrement, l'élément de toit avant (2), ou une partie de celui-ci, entre une position fermée isolant l'habitacle de l'extérieur à l'endroit dudit élément de toit avant et au moins une position ouverte libérant une ouverture de communication entre l'habitacle et l'extérieur au même endroit,
c) - et on lie à l'élément arrière (5) de toit, de façon mobile par rapport à lui, des bras latéraux (14, 15) dont on fait évoluer la position entre :
* une première position où ces bras s'étendent longitudinalement entre cet élément arrière (5) et une zone proche du pare-brise (16), de part et d'autre et le long de l'élément de toit avant (2), en étant alors interposés entre le haut des vitres latérales du véhicule et ledit premier élément de toit avant, plus central qu'eux,
* et une deuxième position où ils sont escamotés à l'écart du pare-brise,
**caractérisé en ce qu**'on déplace l'ensemble desdits éléments de toit jusqu'à leur position de rangement de telle manière que l'élément de toit avant, et le cas échéant lesdits autres éléments de toit, y soit (soient) toujours superposé(s) au-dessus de l'élément de toit arrière (S).

12. Procédé selon la revendication 11, **caractérisé en ce que** dans l'étape b), on recule l'élément de toit avant (2), ou ladite partie de celui-ci, vers l'élément de toit arrière (5), alors en position de recouvrement, au cours de ce recul on incline cet élément de toit avant (2), ou ladite partie concernée de celui-ci, en surélevant son arrière et, en fin de recul, on décale en hauteur l'avant de l'élément de toit sensiblement au niveau de son bord arrière.

## Claims

1. A retractable roof disposed on a convertible vehicle having a longitudinal axis and including a passenger compartment, a structural body (20), side windows (400a, 400b) and a windscreen (16), said roof being such that:
- it includes a first front rigid roof element (2), and a rear rigid roof element (5) where the rear window (5a) of the vehicle is situated, both of them individually movable between a covering position in which they are above the passenger compartment and a storage position reached by movement of said front and rear roof elements and in which they are stored at the place of a storage space located apart from above the passenger compartment, and
- it further includes movable arms (14, 15) fixed to the rear roof element (5) and movable in relation thereto, between:
**■** a first position in which they extend longitudinally between the rear element (5) and a zone close to the windscreen (16), on either side of and along the front roof element (2), then interposed between the top edges of the vehicle side windows and said first front roof element, more central than them,
■ and a second position in which said movable arms are retracted apart from the windscreen,
- whereas the rear roof element (5) is in its covering position and said movable arms are in their first positions, at least one part of the first roof element can be moved in relation to the rear roof element and to the movable arms (14, 15), along them, by sliders (33a, 33b) engaged in series of lateral slides (35) fixed to the movable arms and extending as far as into the rear roof element (5),
- and said at least one part of the front roof element (2) is then movable between a closed position isolating the passenger compartment from the outside at the place of said front roof element, and at least one open position liberating a communication hatch between the passenger compartment and the outside at the same place, **characterized in that**, on the movable arms, the slides (35) are superimposed in series, and tilting means (37, 39, 41, 390) are provided for making the sliders to move to another slide level between said closed and open positions.

2. Retractable roof according to claim 1, **characterized in that**, for each series, there are provided two superimposed slides (35), the upper slide (35a) extending the furthest rearwards in the rear roof element (5).

3. Retractable roof according to one of the preceding claims, **characterized in that** said slides (35) in which the sliders (33a, 33b) are engaged in open position as well as in storage position of said first roof element, are fixed on the rear roof element (5).

4. Retractable roof according to one of the preceding claims, **characterized in that** the sliders (33a, 33b), slides (35) and tilting means (37, 39, 41, 390) for making said sliders to move to another slide level are adapted for making the front roof element, or said part of said front roof element, to go above the rear roof element (5) while moving back from its closed position toward its open position.

5. Retractable roof according to one of the preceding claims, **characterized in that** in storage position the front roof element (2) is located above the rear roof element (5)

6. Retractable roof according to one of the preceding claims, **characterized in that** the movable arms (14, 15) are mounted to pivot on the rear roof element (5) and, in their second position, are retracted towards the rear roof element (5) to which they are then immediately adjacent, while being folded crosswise in relation to the longitudinal axis (100a).

7. Retractable roof according to at least one of the preceding claims, **characterized in that** on the concerned roof element said sliders include front and rear sliders (33a, 33b).

8. Retractable roof according to at least one of the preceding claims, **characterized in that** the tilting means (37, 39, 41, 390) making the sliders to move to another level in the slides comprise tilting means (39, 390) adapted to offset in height the sliders of said concerned roof element upon the passing of the concerned roof element or of its said opening movable part.

9. Retractable roof according to at least one of the preceding claims, **characterized in that** said front roof element (2, 3, 4) or its part movable between said closed and open positions slides along the slides (35) by means of a trolley (32) carrying the sliders (33a, 33b) and which is laterally releasably lockable in relation to the arms (14, 15) and/or the body (20), in the closed status of said front roof element (2).

10. A convertible vehicle provided with the retractable roof according to any one of the preceding claims.

11. A method for manoeuvring a movable roof including the roof according to claim 1 on a convertible vehicle including a structural body (20), a passenger compartment (60), a windscreen (16), the roof including at least one front rigid roof element (2) and a rear rigid roof element (5) where the rear window (5a) of the vehicle is situated, wherein in said method:
a) the roof is made movable in relation to the structural body (20) between a covering position in which its said elements (2, 3, 4, 5) are above the vehicle passenger compartment, with the front roof element (2) then being in front of the rear roof element (5), and a storage position behind the passenger compartment which is reached by moving backward and superimposing the front roof element (2), and if need be all the other roof elements (3, 4) situated ahead of the rear roof element (5) in their closed status, above the rear roof element and by moving the assembly of said roof elements as far as said storage position,
b) the front roof element (2), or a part thereof, is also made movable with respect to the rear roof element (5), then in covering position, between a closed position isolating the passenger compartment from the outside at the place of said front roof element, and at least one open position liberating a communication hatch between the passenger compartment and the outside at the same place,
c) lateral arms (14, 15) are connected to the rear roof element (5) movably with respect thereto, the position of said lateral arms (14, 15) being made to change between:
■ a first position in which said arms extend longitudinally between said rear element (5) and a zone close to the windscreen (16), on either side of and along said front roof element (2), thereby being then interposed between the top edges of the vehicle lateral windows and said first front roof element, more central than them,
■ and a second position in which they are retracted apart from the windscreen,
**characterized in that** the assembly of said roof elements is moved as far as their storage position so that the front roof element, and if need be said other roof elements, should be always superimposed above the rear roof element (5).

12. Method according to claim 11, **characterized in that** in step b), the front roof element (2) or said part thereof is moved backwards towards the rear roof element (5) which is then in covering position, during said backward movement said front roof element (2) or said concerned part thereof is made to tilt by raising its rear, and at the end of said backward movement, the front of said roof element is offset in height substantially at the level of its rear edge.

## Patentansprüche

1. Versenkbares Dach, das auf einem konvertiblen Fahrzeug angeordnet ist, das eine Längsachse aufweist und einen Fahrgastraum, einen Konstruktionsrahmen (20), Seitenscheiben (400a, 400b) und eine Windschutzscheibe (16) umfasst, wobei das Dach so ausgebildet ist, dass:
- dieses ein erstes steifes vorderes Dachelement (2) und ein steifes hinteres Dachelement (5), an welchem eine Heckscheibe (5a) des Fahrzeugs angeordnet ist, umfasst, wobei beide einzeln beweglich sind zwischen einer Abdeckposition, in welcher sie oberhalb des Fahrgastraumes des Fahrzeugs liegen, und einer Lagerungsposition, die durch Verschieben des vorderen und hinteren Dachelements erreicht wird und in welcher sie in einem Lagerungsraum angeordnet sind, der fern vom Fahrgastraum liegt, und
- dieses ferner bewegliche Arme (14, 15) umfasst, die an dem hinteren Dachelement (5) befestigt sind und in Bezug zu diesem beweglich sind zwischen:
* einer ersten Position, in welcher sich diese in Längsrichtung zwischen dem hinteren Element (5) und einer Zone nahe der Windschutzscheibe (16) beiderseits und entlang des vorderen Dachelements (2) erstrecken, also zwischen der Oberseite der Seitenfenster des Fahrzeugs und dem ersten vorderen Dachelement angeordnet, viel mittiger als diese,
* und einer zweiten Position, in welcher sie fern der Windschutzscheibe versenkt sind,
- wenn sich das hintere Dachelement (5) in seiner Abdeckposition befindet und die beweglichen Arme in ihrer ersten Position liegen, wenigstens ein Bereich des ersten Dachelements in Bezug zu dem hinteren Dachelement und den beweglichen Armen (14, 15) entlang derselben durch Gleitstücke (33a, 33b), die in seitliche Gleitschienen (35) eingreifen, verschoben werden kann, die an den beweglichen Armen befestigt sind und sich bis in das hintere Dachelement (5) erstrecken,
- und der wenigstens eine Bereich des vorderen Dachelements (2) dann zwischen einer geschlossenen Position, welche den Fahrgastraum am Ort des vorderen Dachelements gegenüber der äußeren Umgebung isoliert, und wenigstens einer offenen Position, welche eine Kommunikationsöffnung zwischen dem Fahrgastraum und der Umgebung an dem gleichen Ort freigibt, beweglich ist,
**dadurch gekennzeichnet, dass** die Gleitschienen (35) auf den beweglichen Armen übereinander angeordnet sind und eine Schwenkeinrichtung (37, 39, 41, 390) vorgesehen ist, um eine Höhe der Gleitschienen für die Gleitstücke zwischen der geschlossenen Position und der offenen Position zu verändern.

2. Versenkbares Dach nach Anspruch 1, **dadurch gekennzeichnet, dass** reihenweise zwei Gleitschienen (35) übereinander angeordnet vorliegen, wobei sich die obere Gleitschiene (35a) viel weiter nach hinten in das hintere Dachelement (5) erstreckt.

3. Versenkbares Dach nach einem der vorstehenden Ansprüche, **dadurch gekennzeichnet, dass** die Gleitschienen (35), in welche die Gleitstücke (33a, 33b) eingreifen, sowohl in der offenen Position als auch in der Lagerungsposition des ersten Dachelements auf dem hinteren Dachelement (5) fixiert sind.

4. Versenkbares Dach nach einem der vorstehenden Ansprüche, **dadurch gekennzeichnet, dass** die Gleitstücke (33a, 33b), die Gleitschienen (35) und die Schwenkeinrichtung (37, 39, 41, 390) zur Höhenveränderung dieser Gleitstücke an den Gleitschienen so ausgebildet sind, dass das vordere Dachelement, oder der Bereich dieses vorderen Dachelements, über das hintere Dachelement (5) gelangt, wenn es aus seiner geschlossenen Position in seine offene Position zurückfährt.

5. Versenkbares Dach nach einem der vorstehenden Ansprüche, **dadurch gekennzeichnet, dass** sich in der Lagerungsposition das vordere Dachelement (2) oberhalb des hinteren Dachelements (5) befindet.

6. Versenkbares Dach nach einem der vorstehenden Ansprüche, **dadurch gekennzeichnet, dass** die beweglichen Arme (14, 15) schwenkbar auf dem hinteren Dachelement (5) angebracht sind und in ihrer zweiten Position in Richtung des hinteren Dachelements (5) zurückgezogen sind, dem sie dann unmittelbar nahe sind, indem sie quer zur Längsachse (100a) zusammengeklappt werden.

7. Versenkbares Dach nach wenigstens einem der vorstehenden Ansprüche, **dadurch gekennzeichnet, dass** auf dem betreffenden Dachelement die Gleitschienen eine vordere und eine hintere Gleitschiene (33a, 33b) umfassen.

8. Versenkbares Dach nach wenigstens einem der vorstehenden Ansprüche, **dadurch gekennzeichnet, dass** die Schwenkeinrichtung (37, 39, 41, 390), die die Höhe der Gleitstücke in den Gleitschienen verändert, Schwenkelemente (39, 390) umfasst, die die Gleitstücke des betreffenden Dachelements in ihrer Höhenlage beim Durchgang des hinteren Dachelements oder seines beweglichen öffnenden Bereichs versetzen.

9. Versenkbares Dach nach wenigstens einem der vorstehenden Ansprüche, **dadurch gekennzeichnet, dass** das vordere Dachelement (2, 3, 4) oder sein zwischen der geschlossenen und offenen Position beweglicher Bereich mittels eines Schlittens (32), der die Gleitstücke (33a, 33b) trägt und der seitlich in reversibler Weise gegenüber den Armen (14, 15) und/oder dem Rahmen (20) im geschlossenen Zustand dieses vorderen Dachelements (2) verriegelbar ist, gleitet.

10. Konvertibles Fahrzeug mit dem versenkbaren Dach nach einem der vorstehenden Ansprüche.

11. Verfahren zur Handhabung eines beweglichen Daches einschließlich desjenigen nach Anspruch 1 auf einem konvertiblen Fahrzeug mit einem Konstruktionsrahmen (20), einem Fahrgastraum (60), einer Windschutzscheibe (16), wobei das Dach wenigstens ein steifes vorderes Dachelement (2) und ein steifes hinteres Dachelement (5) umfasst, an welchem die Heckscheibe (5a) des Fahrzeugs angeordnet ist, wobei in diesem Verfahren,
a) - das Dach in Bezug zum Konstruktionsrahmen (20) beweglich gemacht wird zwischen einer Abdeckposition, in welcher die genannten Elemente (2, 3, 4, 5) oberhalb des Fahrgastraumes des Fahrzeugs liegen, mit dann dem vorderen Dachelement (2) vor dem hinteren Dachelement (5), und einer Lagerungsposition hinter dem Fahrgastraum, die durch Zurückfahren und Übereinanderlagern des vorderen Dachelements (2) und gegebenenfalls aller weiteren Dachelemente (3, 4), die im geschlossenen Zustand vor dem hinteren Dachelement (5) liegen, über das hintere Dachelement und durch Verschieben der Gesamtheit der Dachelemente bis in diese Lagerungsposition erreicht wird,
b) - auch das vordere Dachelement (2) oder ein Bereich desselben in Bezug zum hinteren Dachelement (5) beweglich gemacht wird, wenn es sich in der Abdeckposition befindet, und zwar zwischen einer geschlossenen Position, welche den Fahrgastraum gegenüber der Umgebung an dem Ort des vorderen Dachelements isoliert und wenigstens einer offenen Position, welche eine Kommunikationsöffnung zwischen dem Fahrgastraum und der äußeren Umgebung an dem gleichen Ort freigibt,
c) - und mit dem hinteren Dachelement (5) in beweglicher Weise zu diesem Seitenarme (14, 15) verbunden werden, mit denen die Position gewechselt wird zwischen:
* einer ersten Position, in welcher sich die Arme in Längsrichtung zwischen diesem hinteren Element (5) und einer Zone nahe der Windschutzscheibe (16) beiderseits und entlang des vorderen Dachelements (2) erstrecken, sich also zwischen der Oberseite der Seitenfenster des Fahrzeugs und dem ersten vorderen Dachelement befinden, viel mittiger als diese,
* und einer zweiten Position, in welcher sie fern von der Windschutzscheibe versenkt sind,
**dadurch gekennzeichnet, dass** die Gesamtheit der Dachelemente bis in ihre Lagerungsposition verschoben wird, derart, dass das vordere Dachelement und gegebenenfalls die weiteren Dachelemente dort immer über dem hinteren Dachelement (5) gelagert ist/sind.

12. Verfahren nach Anspruch 11, **dadurch gekennzeichnet, dass** im Schritt b) das vordere Dachelement (2) oder der Bereich desselben zum hinteren Dachelement (5) zurückgefahren wird, wenn sich dieses in der Abdeckposition befindet, dieses vordere Dachelement (2) oder der betreffende Bereich desselben im Verlauf des Zurückfahrens schräg gestellt wird, indem seine Hinterseite angehoben wird, und, am Ende der Rückbewegung, die vordere Höhenlage des Dachelements im Wesentlichen auf das Niveau seiner Hinterkante verlagert wird.
